# EUROPÄISCHE PATENTSCHRIFT

(11) **EP 2 827 070 B1**
(45) Veröffentlichungstag und Bekanntmachung des Hinweises auf die Patenterteilung: **22.03.2017**
(21) Anmeldenummer: 14173657.9
(22) Anmeldetag: 24.06.2014
(51) Int. Cl.: F16B 2/10, F24D 19/02

(54) **Vorrichtung zum Haltern eines Heizkörpers und Baugruppe sowie Spezialwerkzeuge hierzu**
Device for holding a heater and assembly and special purpose tools for the same
Dispositif de fixation d'un radiateur et bloc ainsi qu'outils spéciaux associés

(30) Priorität: 19.07.2013 DE 202013103242 U
(43) Veröffentlichungstag der Anmeldung: 21.01.2015
(73) Patentinhaber: WEMEFA Horst Christopeit GmbH, 42555 Velbert (DE)
(72) Erfinder: Rose, Dietmar, 45663 Recklinghausen (DE)
(74) Vertreter: Buse, Mentzel, Ludewig Patentanwaltskanzlei

(56) Entgegenhaltungen:
- DE-U1-202009 018 481

## Beschreibung

Die Erfindung betrifft eine Vorrichtung zum Haltern eines Heizkörpers, insbesondere eines Röhrenradiators an wenigstens einer Konsole o.dgl. sowie eine Baugruppe hierzu.

Röhrenradiatoren sind seit langem bekannt und finden vielfach Verwendung. Wichtig ist es, eine Vorrichtung zum Haltern solcher Heizkörper bereitzustellen, die dazu in der Lage ist, solche Heizkörper sicher zu halten und ein ungewolltes Lösen des Heizkörpers zu verhindern, um Unfälle zu vermeiden. Üblicherweise werden dabei Halteelemente zur Verfügung gestellt, die einen Zwischenraum aufweisen, in welchem ein Teil des Heizkörpers, wie beispielweise eine einzelne Röhre, gehaltert werden kann.

Die DE 20 2007 004 680 U1, DE 10 2010 047 394 A1 und DE 10 2010 047 395 A1 zeigen derartige Vorrichtungen, um Röhrenheizkörper zu haltern. Den Gegenständen dieser drei Dokumente ist gemein, dass bei der Montage des Heizkörpers eine einzelne Röhre mit der beschriebenen Vorrichtung in Wirkverbindung gebracht wird und dann mittels eines Werkzeuges ein Verriegelungszustand hergestellt werden muss, in dem ein unbeabsichtigtes Lösen des Heizkörpers von der Vorrichtung verhindert wird. Nachteilig bei einer solchen Anordnung ist es, dass eine Bedienperson vergessen kann diesen Verriegelungszustand herbei zu führen und somit auch diese zusätzliche Sicherung des Heizkörpers. In einer solchen Situation ist der Heizkörper nicht mehr ausreichend gesichert. Er mag zwar momentan an der Vorrichtung gehaltert werden, insbesondere wenn mehrere Halteelemente vorgesehen sind, aber bei Belastung bzw. beim dagegen Lehnen oder nach vorne ziehen kann es sein, dass der Heizkörper aus dem Halteelement herausrutscht und so Unfälle passieren. Dies gilt es zu vermeiden.

Die DE 10 2009 060 424 A1 beschreibt ebenfalls eine Vorrichtung zum Haltern eines Heizkörpers, insbesondere eines Röhrenradiators. Hier wird ein Heizkörperteil, wie beispielsweise eine einzelne Röhre, in einem von zwei Backen umschlossenen Zwischenraum gehaltert. Bei der Montage des Heizkörpers und beim Einbringen des Heizkörperteils in diesen Zwischenraum findet eine automatische Verriegelung des Halteelementes statt. Ein Vergessen der Verriegelung, wie bei den zuvor beschriebenen Gegenständen des Standes der Technik, kann hier nicht mehr erfolgen. Allerdings ist das eigentliche Verriegelungselement eher filigran ausgestaltet. Eine geplante Entriegelung kann stattfinden, indem ein Betätigungsglied mit einem Werkzeug, wie beispielsweise einem Schraubendreher, betätigt wird. So kann es beispielsweise auch passieren, dass beim Reinigen des Heizkörpers eine Bedienperson mit einem Reinigungsgegenstand, wie einem Staubwedel oder der Düse eines Staubsaugers, an dieses Betätigungsglied stößt und versehentlich das Haltelement in seine Offenstellung bringt, so dass eine sichere Halterung des Heizkörpers ebenfalls nicht mehr gegeben ist.

Ein solche Vorrichtung zum Haltern eines Heizkörpers gemäß dem Oberbegriff des Anspruchs 1 ist aus der Gebrauchsmusterschrift DE202009018481U1 bekannt.

Aufgabe der Erfindung ist es nunmehr, die vorerwähnten Nachteile zu vermeiden und eine Vorrichtung zum Haltern eines Heizkörpers zu schaffen, bei denen das Haltelement nicht mehr ohne die gezielte Anwendung eines Werkzeugs in seine Offenstellung gebracht werden kann. Darüber hinaus ist es Aufgabe der Erfindung, eine komplette Baugruppe bereitzustellen, die diese Vorteile in sich vereint, sowie Spezialwerkzeuge zu generieren, die bei der gezielten Betätigung der Vorrichtung Verwendung finden. Diese Aufgabenstellungen werden durch die kennzeichnenden Merkmale der Ansprüche 1, 5 und 14 gelöst, denen folgende besondere Bedeutung zukommt.

Beim Überführen des Halteelements in seine Schließstellung tritt automatisch ein an der Vorderseite des ersten Schenkels vorgesehener Vorsprung mit einem Gegenvorsprung am zweiten Schenkel in Wirkverbindung, so dass die Vorsprünge automatisch einrasten und so ein Verriegelungszustand entsteht. In diesem kann das Halteelement nicht mehr ohne die Verwendung eines Öffnungswerkzeugs, insbesondere in Form eines Spezialwerkzeuges, in seine Offenstellung überführt werden. Beim beschriebenen Verschwenken der Schenkel wirkt dabei üblicherweise ein zu montierender Heizkörper auf einen oder mehrere Betätigungsvorsprünge am Halteelement ein. Je nach Bauform des Heizkörpers kann das Halteelement auch nur von der den Schenkeln abgewandten Seite von seiner Schließstellung in seine Offenstellung gebracht werden. Hierdurch wird verhindert, dass das Halteelement im montierten Zustand des Heizkörpers versehentlich in seine Offenstellung gebracht wird.

Bezogen auf die erfindungsgemäße Baugruppe mit wenigstens einem Halteelement und wenigstens einer Konsole, an der dieses Haltelement festgelegt ist, bedeutet dies, dass das Halteelement nicht ohne die Verwendung eines Öffnungswerkzeuges von seiner Schließstellung in die Offenstellung überführbar ist. Einfacher noch ist dieses Überführen, wenn das Halteelement zunächst durch ein Demontagewerkzeug von den Konsole entfernt wird, um es dann in seine Offenstellung durch Verwendung eines Öffnungswerkzeuges zu überführen. Ist in einer erfindungsgemäßen Baugruppe ein Heizkörper an der Konsole befestigt, kann eine versehentliche Demontage des Heizkörpers nicht erfolgen, da die Haltelemente nur durch ein spezielles Werkzeug von der Konsole demontiert bzw. von ihrer Schließstellung in ihre Offenstellung gebracht werden können. Eine unbeabsichtigte Betätigung des Halteelementes oder eine unbeabsichtigte Demontage des Halteelementes von der Konsole und somit eine unerwünschte Demontage des Heizkörpers werden so verhindert.

In einem bevorzugten Ausführungsbeispiel sind der Vorsprung als Rastnase und der Gegenvorsprung als Ausnehmung ausgebildet. Bei der Herbeiführung des Verriegelungszustands der Schenkel greift dann die Rastnase in die Ausnehmung ein und rastet dort ein.

Vorzugsweise ist an jedem Schenkel des Halteelements auf seiner Innenseite ein Kunststoffeinsatz vorgesehen. Dieser dient dem Schutz gegen Schallübertragungen über den Heizkörper. Besonders einfach wird der Kunststoffeinsatz mit einer Clipsverbindung oder Rastverbindung mit dem jeweiligen Schenkel verbunden. Andere Möglichkeiten der Verbindung sind selbstverständlich auch denkbar. Vorzugsweise ist der Kunststoffeinsatz in seiner dem Zwischenraum zugewandten Seite der Form nach der Form des Heizkörperteils, den er umgreifen soll, angepasst. In dieser speziellen Ausführungsform kann der erste Kunststoffeinsatz dann den Vorsprung bzw. die Rastnase aufweisen, während der Gegenvorsprung bzw. die Ausnehmung an dem zweiten Kunststoffeinsatz angeordnet ist. Dies hat den Vorteil, dass die Elastizität des Kunststoffes ausgenutzt werden kann, um die Rastverbindung herbeizuführen oder auch wieder zu lösen. Werden die Kunststoffeinsätze durch ein Spritzgussverfahren hergestellt, können der Vorsprung und der Gegenvorsprung einfach beim Herstellungsprozess angeformt werden.

In einem bevorzugten Ausführungsbeispiel sind die beiden Schenkel des Halteelements baugleich zueinander ausgebildet. Um die richtige Halterung des Heizkörpers zu ermöglichen, werden die Schenkel beim Einbau um vorzugsweise 180° zueinander verdreht eingebaut. Wenn die beiden Schenkel baugleich zueinander ausgebildet sind, reduzieren sich die Kosten für die Produktion und Lagerhaltung. Dies ist daher besonders vorteilhaft.

In einem weiteren bevorzugten Ausführungsbeispiel weist die erfindungsgemäße Baugruppe wenigstens eine Aushebesicherung auf, um ein unbeabsichtigtes Ausheben jedes der Halteelemente aus der Konsole zu vermeiden. Dies ist mittlerweile auch durch Richtlinien zur Sicherheit solcher Vorrichtungen und Baugruppen empfohlen. Um diesen Anforderungen gerecht zu werden, weist praktischerweise jedes Halteelement eine solche Aushebesicherung auf.

Um ein Halteelement von der Konsole zu demontieren, ist ein Betätigungsteil vorgesehen, welches vorteilhafterweise an der Aushebesicherung ausgebildet ist. Dieses Betätigungsteil befindet sich bei montierten Halteelementen in seiner Sperrposition, in welcher es mit der Konsole in Eingriff steht und ein Lösen des Halteelements von der Konsole verhindert wird. Das Betätigungsteil ist aber in eine Demontageposition bringbar, in welcher das Halteelement von der Konsole lösbar ist. Hierbei ist ein Demontagewerkzeug zum Überführen des Betätigungsteils in seine Demontageposition vorgesehen, bei welchem es sich vorteilhafterweise um ein Spezialwerkzeug handelt. Am Betätigungsteil ist dann eine Ausnehmung ausgebildet, in welche das Demontagewerkzeug zumindest bereichsweise, einbringbar ist, wobei das Betätigungsteil von der Konsole durch das Demontagewerkzeug weg bewegbar ist, um es außer Eingriff mit der Konsole und somit in seine Demontageposition zu bringen und so das Halteelement von der Konsole lösen zu können. Die Verwendung eines Spezialwerkzeugs als Demontagewerkzeug hat den Vorteil, dass ein unbeabsichtigtes Verbringen des Betätigungsteils in seine Demontageposition, beispielsweise beim Reinigen des Heizkörpers nicht möglich ist. Eine Bedienperson muss also gezielt das Demontagewerkzeug anwenden, um die Halteelemente und somit auch den Heizkörper von der Konsole zu demontieren.

Bei einer Demontage des bzw. der Halteelemente von der Konsole bzw. bei der Demontage eines von den Halteelementen gehaltenen Heizkörpers von der Konsole verbleiben die Halteelemente üblicherweise in ihrer Schließstellung. Dies wird u.a. dadurch realisiert, dass die Betätigungselemente, die dafür sorgen die Halteelemente in ihre Offenstellung zu bringen, von der dem Heizkörper zugewandten vorderen Seite des Halteelementes gar nicht oder nur sehr schwer demontierbar sind. Sie sind somit beim montierten Heizkörper praktisch nicht zugänglich. Auch hierdurch wird die Sicherheit erhöht und Unfälle werden vermieden.

Die Baugruppe kann erfindungsgemäß noch ein Öffnungswerkzeug in Form eines Spezialwerkzeuges umfassen. Dieses kann dann auf das Betätigungselement des Haltelements, insbesondere auf den Vorsprung bzw. die Rastnase einwirken, um die Rastverbindung und damit den Verriegelungszustand der Schenkel zu lösen und das Halteelement in seine Offenstellung zu überführen. Vorzugsweise ist das Öffnungswerkzeug dabei so ausgebildet, dass es von der den Schenkeln abgewandten Seite auf das Halteelement bzw. den Vorsprung einwirkt. So muss zunächst das Halteelement mit dem montierten Heizkörper von der Konsole entfernt werden, bevor das Halteelement von dem Heizkörper demontierbar ist durch Überführen des Halteelements in seine Offenstellung. Hierdurch wird die Sicherheit weiter erhöht, da ein unbeabsichtigtes Überführen des Halteelements in die Offenstellung bei an der Konsole montiertem Heizkörper nicht erfolgen kann.

Die erfindungsgemäße Baugruppe besitzt in einem bevorzugten Ausführungsbeispiel den Vorteil, dass die an der Konsole montierten Halteelemente seitlich verschieblich sind. Dies wird durch die spezielle Halterung der Halteelemente an der Konsole realisiert und dient dazu, Montagetoleranzen der Konsole, die üblicherweise an einer Wand oder Ähnlichem befestigt wird, auszugleichen. Auch wenn bei der Befestigung der Konsole an der Wand die Bohrungen ein wenig seitlich abweichen, kann der Heizkörper in den Halteelementen so noch sicher montiert werden.

Des Weiteren weist die Baugruppe in einem bevorzugten Ausführungsbeispiel an ihrem oberen Ende eine Justiereinrichtung auf, um Montagetoleranzen in der Höhe bei der Montage mehrerer Konsolen nebeneinander auszugleichen. Die Höhe der Konsolen kann dann auch bei nicht ganz korrekter Montage noch ausgeglichen werden, um den Heizkörper gerade zu haltern.

Schließlich ist in einem besonders bevorzugten Ausführungsbeispiel an der erfindungsgemäßen Baugruppe noch eine Hochschiebesicherung vorgesehen, die verhindert, dass ein an der Baugruppe montierter Heizkörper nach oben verschieblich ist. Auch dies entspricht wieder den gängigen Richtlinien, bei denen ein Heizkörper auch bei einer Belastung von unten noch sicher gehaltert sein muss. Die Hochschiebesicherung weist hierzu Anschläge auf, die verhindern, dass der Heizkörper in den Halteelementen nach oben verschoben werden kann.

Weitere Vorteile und Ausführungsbeispiele der erfindungsgemäßen Baugruppe ergeben sich aus der nachfolgenden Beschreibung, den Unteransprüchen sowie den Zeichnungen. In den Figuren ist die Erfindung wie folgt dargestellt:
- Fig. 1:: ein erfindungsgemäßes Halteelement, perspektivisch von vorne in Geschlossenstellung,
- Fig. 2:: das Halteelement aus Fig. 1, in Draufsicht,
- Fig. 3:: das Halteelement aus Fig. 1, in Offenstellung,
- Fig. 4:: eine erfindungsgemäße Aushebesicherung mit Betätigungsteil,
- Fig. 5:: ein erfindungsgemäßer Schenkel eines Halteelements, perspektivisch,
- Fig. 6:: ein erfindungsgemäßer Kunststoffeinsatz mit Vorsprung und runder Kontur, perspektivisch,
- Fig. 7:: ein erfindungsgemäßer Kunststoffeinsatz mit Vorsprung und eckiger Kontur, perspektivisch,
- Fig. 8:: eine erfindungsgemäße Baugruppe mit Halteelementen in Offenstellung, in Vorderansicht,
- Fig. 9:: die Baugruppe aus Fig. 8, perspektivisch,
- Fig. 10:: eine erfindungsgemäße Baugruppe, perspektivisch mit Heizkörper und Demontagewerkzeug,
- Fig. 11:: ein Ausschnitt aus einem Heizkörper mit erfindungsgemäßem Halteelement und Öffnungswerkzeug, perspektivisch,
- Fig. 12:: ein erfindungsgemäßes Öffnungswerkzeug.

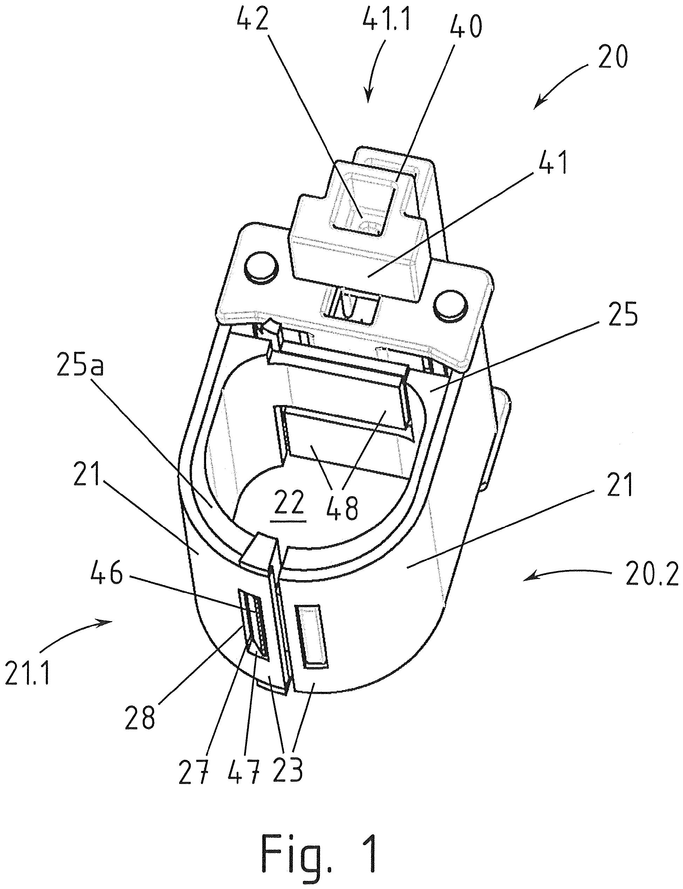

In Fig. 1 ist ein erfindungsgemäßes Halteelement 20 in Schließstellung 20.2 gezeigt. Man erkennt die beiden Schenkel 21 sowie die in den Schenkeln 21 angeordneten, mit diesen durch eine Clipsverbindung 26 verbundenen Kunststoffeinsätze 25, 25a. Zwischen den geschlossenen Schenkeln 21 und den Kunststoffeinsätzen 25,25a ist der Zwischenraum 22 vorgesehen, in dem eine hier nicht dargestellte Röhre 51 eines Heizkörpers 50 halterbar ist.

An dem ersten Schenkel 21 ist ein Kunststoffeinsatz 25 mit einem als Rastnase 46 ausgebildeten Vorsprung 27 angeordnet, der mit einem als Ausnehmung 47 ausgebildeten Gegenvorsprung 28 zusammenwirkt, um hier den Verriegelungszustand 21.1 der beiden Schenkel 21 herzustellen. Dabei sind Vorsprung 27 und Gegenvorsprung 28 an der Vorderseite 23 der Schenkel 21, genauer gesagt an den beiden Kunststoffeinsätzen 25, 25a, angeordnet. In diesem Verriegelungszustand 21.1 ist eine Röhre 51 eines Heizkörpers 50 in dem Zwischenraum 22 halterbar, da die Röhre 51 von den beiden Schenkeln 21 quasi umklammert wird. Auch ist hier die Aushebesicherung 40 zu erkennen, auf die später noch näher eingegangen werden wird.

Um das Halteelement 20 wieder in seine Offenstellung 20.1 zu bringen, muss auf den Vorsprung 27, hier also die Rastnase 46 von der Vorderseite 23 her eingewirkt werden, damit sich die bestehende Rastverbindung lösen kann. Dies kann vorteilhafterweise mit einem speziellen Öffnungswerkzeug 70 erfolgen.

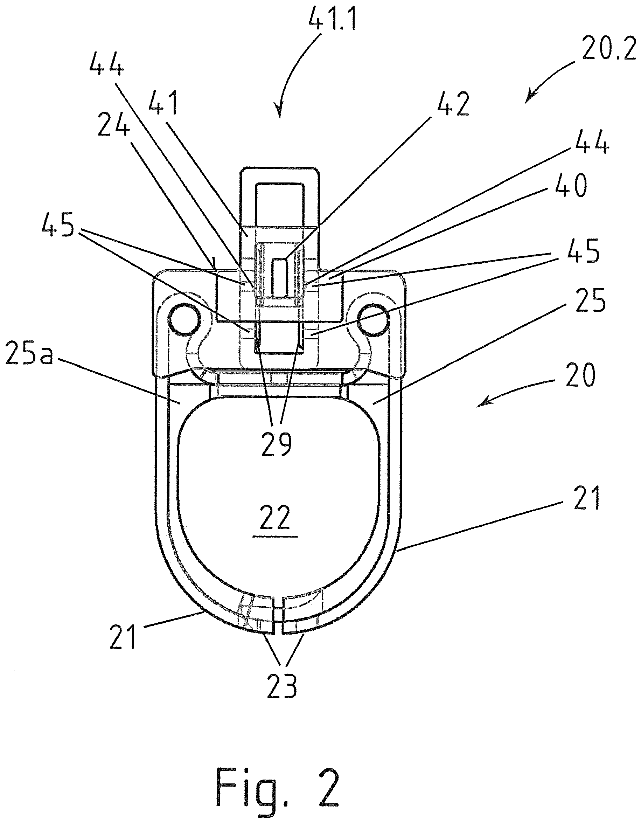

Auch in Fig. 2 ist das Halteelement 20 aus Fig. 1 in Schließstellung 20.2 zu sehen, allerdings in Draufsicht. Man erkennt, dass die Form des Zwischenraumes 22 nicht vollständig rund, sondern abgerundet eckig ausgebildet ist. Die genaue Form des Zwischenraums 22 ist von der Form der Röhre 51 des Heizkörpers 50 abhängig, an dem das betreffende Halteelement 20 montiert werden soll.

Auch ist die Befestigung der Aushebesicherung 40 an dem Halteelement 20 hier erkennbar. Die Aushebesicherung 40 umfasst ein Betätigungsteil 41, das hier eine Ausnehmung 42 aufweist, in welche ein hier nicht dargestelltes Demontagewerkzeug 60 eingreifen kann. Außerdem sind Löcher 45 im Halteelement 20 zu erkennen, in die Nocken 44 an der Aushebesicherung 40 eingreifen können. Das Betätigungsteil 41 befindet sich hier in seiner Sperrposition 41.1. Unter Zwischenschaltung eines Demontagewerkzeuges 60 kann die gesamte Aushebesicherung 40 und somit auch das Betätigungsteil 41 nach vorne bewegt werden, um dann nicht mehr mit der Konsole 30 in Eingriff zu stehen und eine Demontage des Halteelements 20 von der Konsole 30 zu ermöglichen.

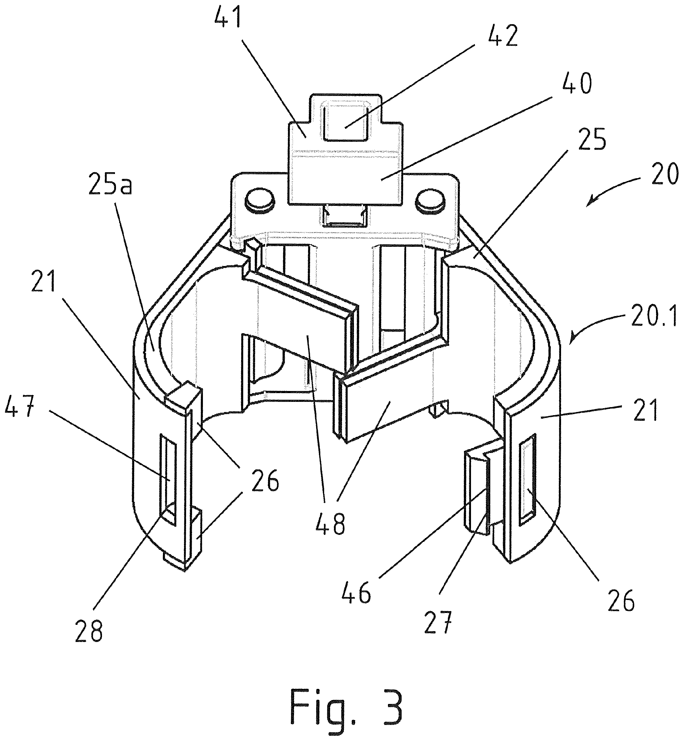

Fig. 3 zeigt wiederum das Halteelement 20 allerdings in seiner Offenstellung 20.1. Wird nun die Röhre 51 eines Heizkörpers 50 von vorne zwischen die Schenkel 21 gedrückt, so wirkt diese auf die Betätigungsvorsprünge 48 und die Schenkel 21 bewegen sich automatisch aufeinander zu und verschwenken bis die Schließstellung 20.2 erreicht wird. Das Zusammenwirken des am ersten Kunststoffeinsatzes 25 ausgebildeten Vorsprungs 27 mit dem Gegenvorsprung 28 am zweiten Kunststoffeinsatz 25a - hier als Rastnase 46 und Ausnehmung 47 ausgebildet - funktioniert dann ebenfalls automatisch, so dass auch die Schenkel 21 in ihre Verriegelungsposition 21.1 gebracht werden. Auch hier ist wieder die Aushebesicherung 40 mit dem Betätigungsteil 41 und der Ausnehmung 42 erkennbar.

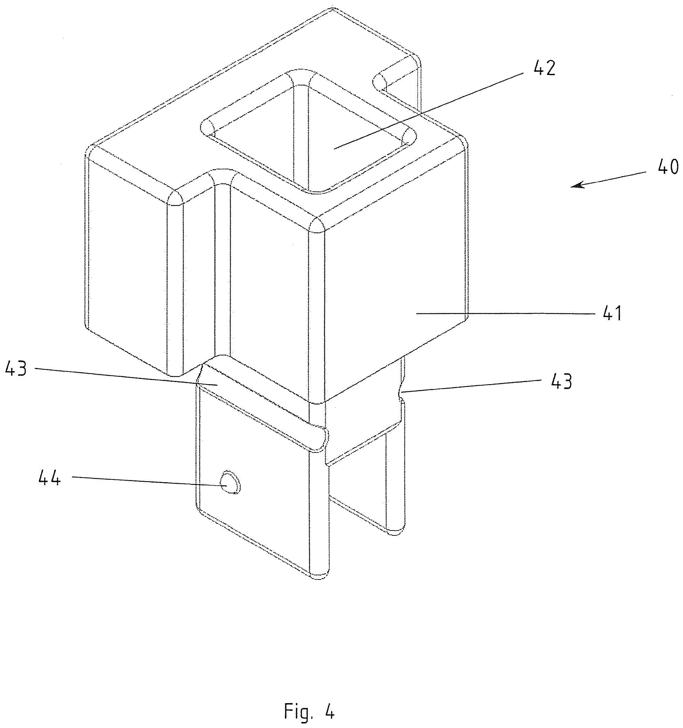

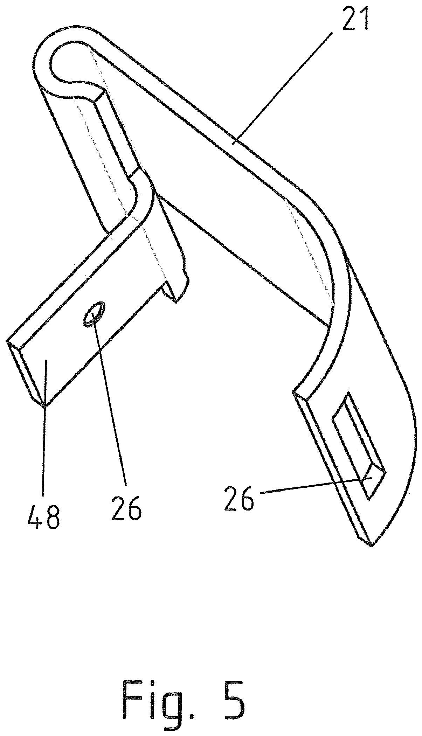

Fig. 4 zeigt die Aushebesicherung 40, die auch gleichzeitig als Betätigungsteil 41 dient und zu diesem Zweck die Ausnehmung 42 aufweist. Der untere Teil dieser Aushebesicherung 40 ist üblicherweise in das Halteelement 20 eingesteckt. Die in diesem Bereich befindlichen Nuten 43 laufen beim Überführen des Betätigungsteils 41 von der Sperrposition 41.1 in die Demontageposition und zurück auf den Schienen 29 am Halteelement 20, die aus Fig. 2 ersichtlich sind. Unterhalb der beiden Nuten 43 ist jeweils ein Nocken 44 vorgesehen, der sowohl in der Sperrposition 41.1 als auch in der Demontageposition des Betätigungsteils 41 mit den in Fig. 2 dargestellten Löchern 45 am Halteelement 20 eine leichte Rastverbindung eingeht, um zwei definierte Positionen des Betätigungsteils 41 sicherzustellen und die Montage und Demontage des Halteelements 20 an der Konsole 30 zu vereinfachen. Fig. 5 zeigt einen Schenkel 21. Ein derartiger Schenkel 21 kann beispielsweise aus Federstahl bestehen. Man erkennt zwei Öffnungen, die der Herbeiführung einer Clipsverbindung 26 zu einem der Kunststoffeinsätze 25, 25a dienen. Die Kunststoffeinsätze 25, 25a weisen dazu zwei entsprechende Gegenclipselemente auf, die dann den betreffenden Kunststoffeinsatz 25, 25a einfach am Schenkel 21 sichern. Die längliche Öffnung kann jedoch auch als Gegenvorsprung 28 dienen in die ein Vorsprung 27, der an dem ersten Schenkel 21 bzw. dessen Kunststoffeinsatz 25 angeordnet ist, eingreift.

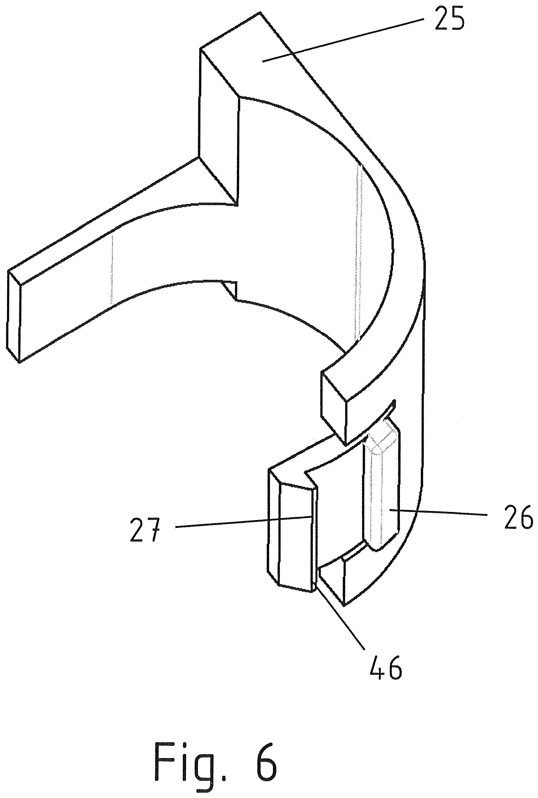

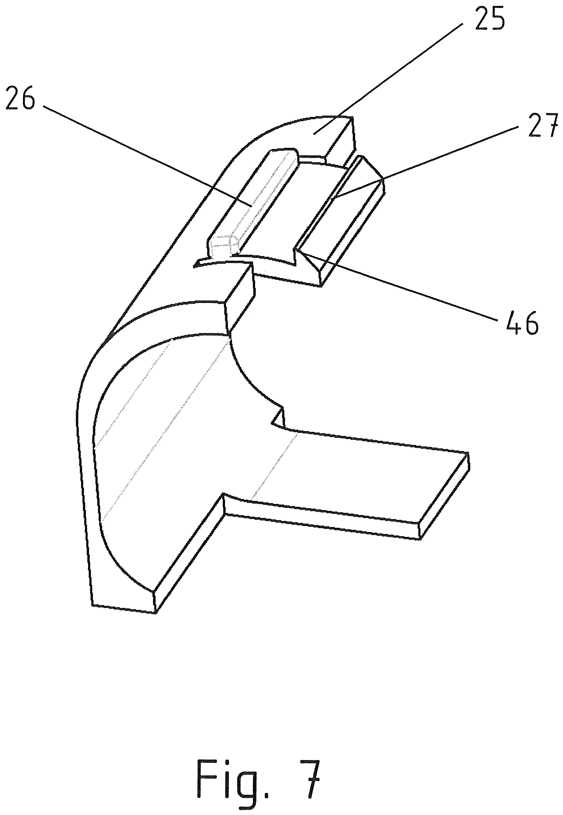

In den Fig. 6 und 7 ist jeweils ein Kunststoffeinsatz 25 perspektivisch dargestellt. Dieser weist jeweils einen Vorsprung 27 in Form einer Rastnase 46 auf, sowie ein Gegenclipselement zur Herbeiführung der bereits erwähnten Clipsverbindung 26. Der Innenumfang der beiden Kunststoffeinsätze 25 ist unterschiedlich ausgebildet. In Fig. 6 ist er rund gehalten, in Fig. 7 eckig abgerundet. Diese verschiedenen Kunststoffeinsätze 25 kommen bei Heizkörpern 50 mit unterschiedlich geformten Röhren 51 zum Einsatz. Die entsprechenden Schenkel 21 sind jedoch identisch ausgebildet, um Kosten für die Herstellung und Lagerhaltung zu sparen. Je nach Form der entsprechenden Röhre 51 wird dann nur ein jeweils passender Kunststoffeinsatz 25, 25a gewählt.

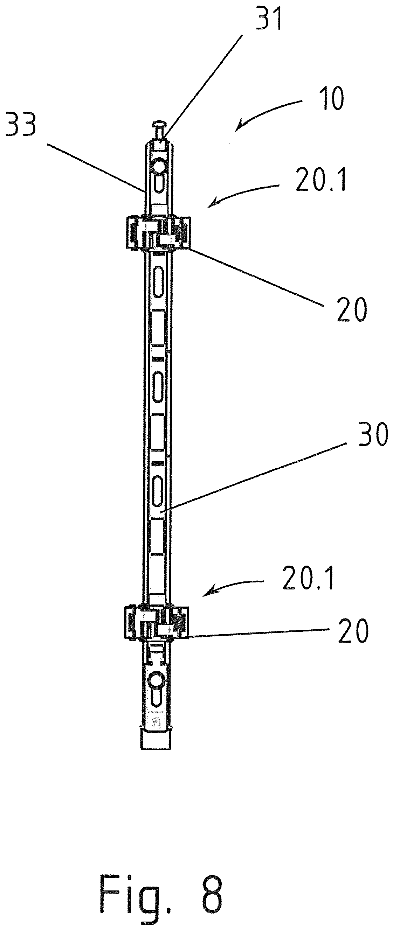

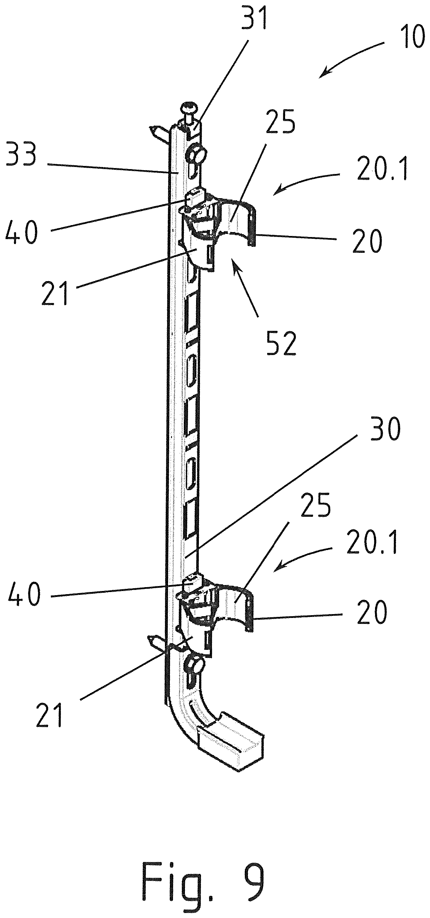

Die Fig. 8 und 9 zeigen eine erfindungsgemäße Baugruppe 10, die hier eine Konsole 30 und zwei Halteelemente 20 umfasst. Die Halteelemente 20 sind in ihrer Offenstellung 20.1 dargestellt. Eine solche Baugruppe 10 kann an einer Wand oder Ähnlichem vormontiert sein. Dann muss nur noch ein entsprechender Heizkörper 50 in die Halteelemente 20 eingebracht werden. Üblicherweise sind je nach Größe des Heizkörpers 50 wenigstens zwei solcher Baugruppen 10 vorgesehen. Jede Baugruppe 10 kann auch mehr oder weniger Halteelemente 20 aufweisen als dargestellt. Um einen Heizkörper 50 in der Baugruppe 10 zu montieren, wird er in Richtung des Pfeiles 52 mit einer Röhre 51 in die Halteelemente 20 hinein gedrückt, wobei die Röhre 51 dann mit den Schenkeln 21 zusammenwirkt und die Halteelemente 20 durch die Montage des Heizkörpers 50 automatisch von ihrer dargestellten Offenstellung 20.1 in ihre Schließstellung 20.2 verbracht werden. Darüber hinaus werden durch diese Bewegung auch die Schenkel 21 automatisch in ihre Verriegelungsstellung 21.1 überführt.

Man erkennt am oberen Ende 33 der Konsole 30 die Justiereinrichtung 31. Mit der Justiereinrichtung 31 kann die genaue Höhe der Konsole 30 justiert werden, damit mehrere Konsolen 30 auch bei Ungenauigkeiten der Befestigung in der Wand die gleiche Höhe aufweisen. Dies ist insbesondere dann wichtig, wenn die Konsolen 30 an ihrem unteren Bereich eine Auflagefläche für den Heizkörper 50 aufweisen. Durch die Justiereinrichtung 31 kann sichergestellt werden, dass die Höhe der Konsolen 30 entsprechend angepasst wird und der Heizkörper 50 auf allen unteren Auflageflächen aufliegt.

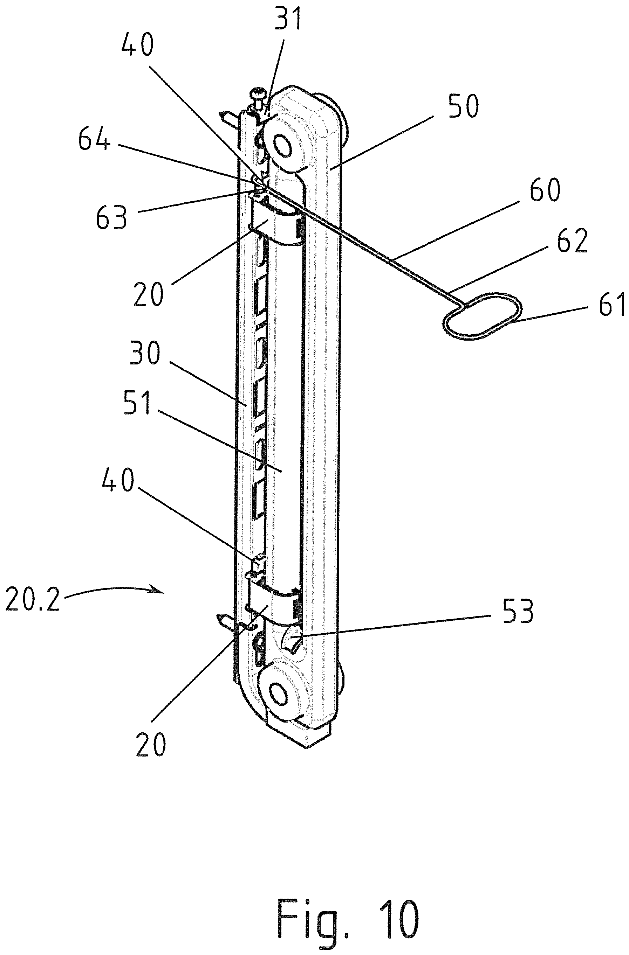

Um einen Heizkörper 50 aus einer erfindungsgemäßen Baugruppe 10 wieder zu demontieren, wird das in Fig. 10 gezeigte Demontagewerkzeug 60 eingesetzt, welches mit der Ausnehmung 42 an der als Betätigungsteil 41 ausgebildeten Aushebesicherung 40 zusammenwirkt. Das Demontagewerkzeug 60 weist dabei an seinem einen Ende 62 einen Handgriff 61 auf und an seinem anderen Ende 63 zwei Verkröpfungen 64, um die Röhre 51 des Heizkörpers 50 zu hintergreifen und in die Ausnehmung 42 der Aushebesicherung 40 einzugreifen. Durch Ziehen am Handgriff 61 kann die Bedienperson dann das Betätigungsteil 41 nach vorne bewegen und so in seine Demontageposition bringen, in der die Demontage des Heizkörpers 50 mit den Halteelementen 20 von der Konsole 30 ermöglicht wird.

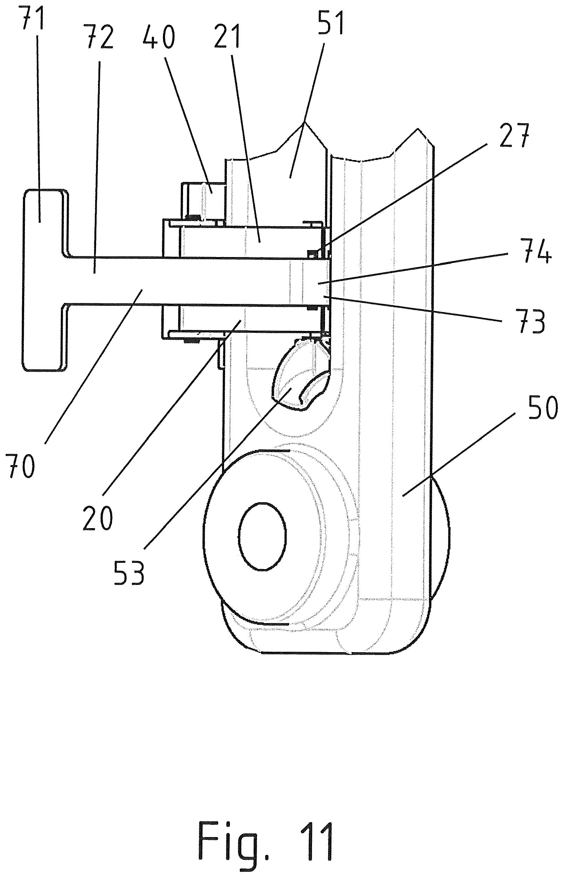

Des Weiteren ist die Hochschiebesicherung 53 erkennbar, die ein unbeabsichtigtes Hochschieben des an der Konsole 30 montierten Heizkörpers 50 verhindert. Diese ist auch in Fig. 11 nochmals gezeigt.

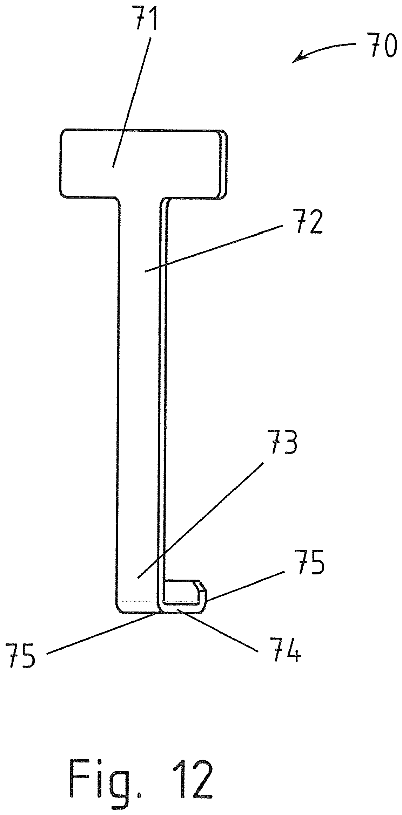

In Fig. 11 ist zu sehen, wie ein von der Konsole 30 demontiertes Halteelement 20, welches noch eine Röhre 51 eines Heizkörpers 50 umgreift, mit Hilfe eines Öffnungswerkzeuges 70 in seine Offenstellung 20.1 verbracht wird. Das Öffnungswerkzeug 70 selbst ist noch mal in Fig. 12 dargestellt. Man erkennt, dass das Öffnungswerkzeug 70 an seinem einen Ende 72 eine Handhabe 71 aufweist, während es an seinem anderen Ende 73 zwei Abkantungen 75 umfasst. Diese Abkantungen 75 erlauben es dem Öffnungswerkzeug 70 von der den Schenkeln 21 abgewandten Seite 24 auf den Vorsprung 27 oder ein anderes Element der Rastverbindung der Schenkel 21 einzuwirken und die Schenkel 21 wieder in den Entriegelungszustand zu überführen, in dem das Halteelement 20 vom Heizkörper 50 entnehmbar ist. Mit dem hier dargestellten Öffnungswerkzeug 70 ist ein Lösen des Verriegelungszustandes 21.1 des Halteelements 20 nur von der den Schenkeln 21 abgewandten Seite 24 möglich, was bedeutet, dass der Heizköper 50 mit den Halteelementen 20 von der Konsole 30 demontiert sein muss. Hierdurch ist die Baugruppe 10 noch sicherer ausgestaltet, da der Heizkörper 50 beim Überführen der Halteelemente 20 in die Offenstellung 20.1 nicht mehr an der Konsole 30 montiert ist und so auch nicht von dieser herunterfallen kann. Außerdem ist das Überführen der Halteelemente 20 in die Offenstellung 20.1 nicht versehentlich möglich sondern kann nur absichtlich herbeigeführt werden.

Abschließend sei noch darauf hingewiesen, dass die hier dargestellten Ausführungsformen lediglich beispielhafte Verwirklichungen der Erfindung sind. Diese ist nicht darauf beschränkt. Es sind vielmehr noch Abänderungen und Abwandlungen möglich. Beispielsweise kann die Konsole auch aus mehreren Teilen bestehen und muss nicht eine durchgängige Schiene darstellen. Die Konsole ist auch kürzbar für die Anwendung bei Heizkörpern verschiedener Höhe. Darüber hinaus kann der Heizkörper statt zwei Reihen auch mehr oder weniger Reihen von Röhren umfassen. Die Haltelemente können an der Konsole auch an anderer Stelle angeordnet sein. Das Demontagewerkzeug und das Öffnungswerkzeug können andersartig ausgebildet sein.

### Bezugszeichenliste:

- 10: Baugruppe
- 20: Halteelement
- 20.1: Offenstellung von 20
- 20.2: Schließstellung von 20
- 21: Schenkel
- 21.1: Verriegelungszustand von 21
- 22: Zwischenraum
- 23: Vorderseite von 21
- 24: von 21 abgewandte Seite von 20
- 25: erster Kunststoffeinsatz
- 25a: zweiter Kunststoffeinsatz
- 26: Clipsverbindung
- 27: Vorsprung
- 28: Gegenvorsprung
- 29: Schiene
- 30: Konsole
- 31: Justiereinrichtung
- 33: oberes Ende von 30
- 40: Aushebesicherung
- 41: Betätigungsteil
- 41.1: Sperrposition von 41
- 42: Ausnehmung
- 43: Nut
- 44: Nocken
- 45: Loch
- 46: Rastnase
- 47: Ausnehmung
- 48: Betätigungsvorsprung
- 50: Heizkörper
- 51: Röhre
- 52: Richtung der Krafteinwirlung
- 53: Hochschiebesicherung
- 60: Demontagewerkzeug
- 61: Handgriff
- 62: eines Ende von 60
- 63: anderes Ende von 60
- 64: Verkröpfung
- 70: Öffnungswerkzeug
- 71: Handhabe
- 72: eines Ende von 70
- 73: anderes Ende von 70
- 74: Betätigungsende
- 75: Abkantung

## Patentansprüche

1. Vorrichtung zum Haltern eines Heizkörpers (50), insbesondere eines Röhrenradiators, an wenigstens einer Konsole (30) oder dgl.,
mit wenigstens einem Halteelement (20) mit zwei zueinander rotationsbeweglichen Schenkeln (21), welche einen Zwischenraum (22) bilden können, in welchem ein Teil des Heizkörpers (50), insbesondere eine Röhre (51), halterbar ist und so der Heizkörper (50) halterbar ist,
wobei das Halteelement (20) über eine Offenstellung (20.1) verfügt, in der die Schenkel (21) geöffnet sind, so dass der Zwischenraum (22) geöffnet ist und der Teil des Heizköpers (50) an dem Halteelement (20) montierbar ist und weiterhin über eine Schließstellung (20.2) verfügt, in welcher die Schenkel (21) den Zwischenraum (22) bilden, in welchen der Teil des Heizkörpers (50) aufnehmbar und so an dem Halteelement (20) halterbar ist, und wobei das Haltelement (20) wenigstens einen Betätigungsvorsprung (48) aufweist, welcher bei einer Krafteinwirkung (52) von vorne, beispielsweise durch die Montagebewegung des Heizkörpers (50), das Halteelement (20) von seiner Offenstellung (20.1) in seine Schließstellung (20.2) überführt,
**dadurch gekennzeichnet,**
**dass** beim Überführen des Halteelements (20) in seine Schließstellung (20.2) die Schenkel (21) automatisch verschwenkt werden,
wobei dabei ein an der Vorderseite (23) eines der Schenkel (21) vorgesehener Vorsprung (27) mit einem Gegenvorsprung (28) an dem anderen Schenkel (21) in Wirkverbindung tritt und einrastet und so ein Verriegelungszustand (21.1) entsteht
und wobei sich das Halteelement (20) nur durch Einwirken auf den Vorsprung (27) und/oder den Gegenvorsprung (28) mittels eines Öffnungswerkzeuges (70) in seine Offenstellung (20.1) bringen lässt.

2. Vorrichtung nach Anspruch 1, **dadurch gekennzeichnet, dass** der Vorsprung (27) als Rastnase (46) und der Gegenvorsprung (28) als Ausnehmung (47) ausgebildet ist.

3. Vorrichtung nach einem der Ansprüche 1 oder 2, **dadurch gekennzeichnet, dass** an jedem Schenkel (21) ein Kunststoffeinsatz (25, 25a) vorgesehen ist, der mit dem Schenkel (21) verbindbar ist, insbesondere durch eine Clipsverbindung (26) oder Rastverbindung oder durch Einkleben, Verschrauben oder Vernieten, wobei insbesondere der erste Kunststoffeinsatz (25) den Vorsprung (27) bzw. die Rastnase (46) und der zweite Kunststoffeinsatz (25a) den Gegenvorsprung (28) bzw. die Ausnehmung (47) aufweist.

4. Vorrichtung nach einem der Ansprüche 1 bis 3, **dadurch gekennzeichnet, dass** die beiden Schenkel (21) baugleich zueinander ausgebildet sind.

5. Baugruppe (10) umfassend eine Vorrichtung nach einem der Ansprüche 1 bis 4, sowie wenigstens eine Konsole (30), an der das bzw. die Halteelemente (20) der Vorrichtung festlegbar sind.

6. Baugruppe (10) nach Anspruch 5, **dadurch gekennzeichnet, dass** am Halteelement (20) eine Aushebesicherung (40) vorgesehen ist, welche ein unbeabsichtigtes Ausheben jedes der Halteelemente (20) aus der Konsole (30) verhindert.

7. Baugruppe (10) nach Anspruch 6, **dadurch gekennzeichnet, dass** zur Demontage des Halteelements (20) von der Konsole (30) ein Betätigungsteil (41) vorgesehen ist, welches insbesondere an der Aushebesicherung (40) ausgebildet ist und welches sich normalerweise in einer Sperrposition (41.1) befindet, in welcher das Betätigungsteil (41) mit der Konsole (30) in Eingriff steht und ein Lösen des Halteelements (20) von der Konsole (30) verhindert wird, welches aber in eine Demontageposition bringbar ist, in welcher das Halteelement (20) von der Konsole (30) lösbar ist.

8. Baugruppe (10) nach Anspruch 7, **dadurch gekennzeichnet, dass** ein Demontagewerkzeug (60) zum Überführen des Betätigungsteils (41) in seine Demontageposition vorgesehen ist,
wobei am Betätigungsteil (41) eine Ausnehmung (42) ausgebildet ist, in welche das Demontagewerkzeug (60) zumindest bereichsweise einbringbar ist, wobei das Betätigungsteil (41) von der Konsole (30) durch das Demontagewerkzeug (60) weg bewegbar ist, insbesondere mittels einer oder mehrerer Schienen (29), um es außer Eingriff mit der Konsole (30) und somit in seine Demontageposition zu bringen und das Halteelement (20) von der Konsole (30) zu lösen.

9. Baugruppe (10) nach einem der Ansprüche 5 bis 8, **dadurch gekennzeichnet, dass** das Öffnungswerkzeug (70) vorgesehen ist, welches auf das Haltelement (20), insbesondere auf den Vorsprung (27) bzw. die Rastnase (46) einwirken kann, um ein Überführen des Halteelements (20) in seine Offenstellung (20.1) zu bewirken.

10. Baugruppe nach Anspruch 9, **dadurch gekennzeichnet, dass** das Öffnungswerkzeug (70) so ausgebildet ist, dass es von der den Schenkeln (21) abgewandten Seite (24) auf das Halteelement (20) einwirkt, um es in seine Offenstellung (20.1) zu bringen.

11. Baugruppe (10) nach einem der Ansprüche 5 bis 10, **dadurch gekennzeichnet, dass** die an der Konsole (30) montierten Halteelemente (20) seitlich verschieblich sind.

12. Baugruppe (10) nach einem der Ansprüche 5 bis 11, **dadurch gekennzeichnet, dass** die Konsole (30) an ihrem oberen Ende (33) eine Justiereinrichtung (31) aufweist, um Montagetoleranzen in der Höhe auszugleichen.

13. Baugruppe (10) nach einem der Ansprüche 5 bis 12, **dadurch gekennzeichnet, dass** eine Hochschiebesicherung (53) vorgesehen ist, die verhindert, dass ein an der Baugruppe (10) montierter Heizkörper (50) nach oben verschieblich ist.

14. Öffnungswerkzeug (70) zum Öffnen eines Halteelementes (20) nach einem der Ansprüche 1 bis 4, **dadurch gekennzeichnet, dass** das Öffnungswerkzeug (70) an seinem einen Ende (72) eine Handhabe (71) und an seinem anderen Ende (73) ein Betätigungsende (74) aufweist, mit welchem es mit dem Vorsprung (27) bzw. dem Gegenvorsprung (28) in Wirkverbindung bringbar ist, wobei das andere Ende (73) des Öffnungswerkzeuges (70) so abgekantet (75) ist, dass es bei an einem Heizkörper (50) montierten Halteelement (20) den Vorsprung (27) bzw. den Gegenvorsprung (28) von der den Schenkeln (21) abgewandten Seite (24) erreichen kann.

## Claims

1. Device for holding a heater (50), in particular a tube radiator, on at least one bracket (30) or similar, with a minimum of one retaining element (20) with two legs (21) moving rotationally towards each other, which can form an intermediate space (22) in which a part of the heater (50), in particular a tube (51), can be retained and, thus, the heater (50) is retained, whereby, the retaining element (20) has an open position (20.1) into which the leg (21) opens, so that the intermediate space (22) is opened and the part of the heater (50) can be installed on the holding element (20) and, furthermore, has a close position (20.2), in which the leg (21) forms the intermediate space (22), in which the part of the heater (50) is accepted and, thus, is retained on the retaining element (20) and, whereby, the retaining element (20) features a minimum of one activation projection (48) which, in the event of an effective force (52) from the front, for example by the assembly movement of the heater (50), transfers the retaining element (20) from its open position (20.1) to its close position (20.2),
**characterized in that,**
when transferring the retaining element (20) into its close position (20.2), the legs (21) are automatically swivelled, whereby, on the front (23) of one of the legs (21), a projection (27) is provided which comes into operative connection with a counter projection (28) on the other leg (21) and engages and, thus, a locked condition (21.1) occurs and whereby, the retaining element (20) can only be brought into its open position (20.1) by operating the projection (27) and/or the opposing projection (28) using an opening tool (70).

2. Device in accordance with claim 1, **characterized in that** the projection (27) is formed as a latch (46) and the opposing projection (28) as a recess (47).

3. Device in accordance with one of the claims 1 or 2, **characterized in that** a plastic insert (25, 25a) is provided on each leg (21) which can be connected to the leg (21), in particular by a clip connection (26) or a snap connection or by adhering, screwing or riveting, whereby, in particular the first plastic insert (25) features the projection (27) or the engaging lug (46) and the second plastic insert (25a) features the opposing projection (28) or the recess (47).

4. Device in accordance with one of the claims 1 to 3, **characterized in that** both legs (21) are formed as an identical structure to one another.

5. Assembly (10) including a device in accordance with one of the claims 1 to 4, as well as a minimum of one bracket (30), on which the retaining element(s) (20) of the device can be determined.

6. Assembly (10) in accordance with claim 5, **characterized in that** an anti-lift device (40) is provided on the retaining element (20), which prevents inadvertent lifting out of each of the retaining elements (20) from the bracket (30).

7. Assembly (10) in accordance with claim 6, **characterized in that** an actuating part (41) is provided to remove the retaining element (20) from the bracket (30), which, in particular, is formed on the anti-lift device (40) and which is usually in a locked position (41.1), in which the actuating part (41) impinges on the bracket (30) and releasing the retaining element (20) from the bracket (30) is prevented which, however, is brought into a remove position in which the retaining element (20) is released from the bracket (30).

8. Assembly (10) in accordance with claim 7, **characterized in that** a tool for removal (60) is provided to transfer the actuating part (41) into its remove position, whereby, a recess (42) is formed on the actuating part (41) into which the tool for removal (60) can be at least partly inserted, whereby, the actuating part (41) can be moved away from the bracket (30) using the tool for removal (60), in particular by using one or multiple rails (29), in order to disengage it from the bracket (30) and, thus, put it in its remove position and release the retaining element (20) from the bracket (30).

9. Assembly (10) in accordance with one of the claims 5 to 8, **characterized in that** the opening tool (70) is provided, which can effectively operate on the retaining element (20), in particular on the projection (27) or the engaging lug (46) in order to effect transfer of the retaining element (20) to its open position (20.1).

10. Assembly in accordance with claim 9, **characterized in that** the opening tool (70) is formed so that it operates on the retaining element (20) from the opposite side (24) of the legs (21) in order to bring it into its open position (20.1).

11. Assembly (10) in accordance with one of the claims 5 to 10, **characterized in that** the retaining elements (20) installed on the bracket (30) can be moved sidewards.

12. Assembly (10) in accordance with one of the claims 5 to 11, **characterized in that** the bracket (30) features an adjustment device (31) at the top (33) in order to compensate for installation tolerances in the height.

13. Assembly (10) in accordance with one of the claims 5 to 12, **characterized in that** an anti-lift lock (53) is provided which prevents the heater (50) installed on the assembly (10) being moved upwards.

14. The opening tool (70) for opening a retaining element (20) in accordance with the claims 1 to 4, **characterized in that** the opening tool (70) features a handle (71) at one end (72) and an actuating end (74) at the other end (73), with which can be brought into operative connection with the projection (27), or the opposing projection (28), whereby, the other end (73) of the opening tool (70) is chamfered (75) so that it can reach the projection (27), or the opposing projection (28) of a retaining element (20) installed on a heater (50), from the opposite side (24) of the legs (21).

## Revendications

1. Dispositif de fixation d'un radiateur (50), en particulier d'un radiateur à tubes, contre au moins une console (30) ou similaire, avec au moins un élément de retenue (20) comprenant deux branches (21) capables de tourner l'une par rapport à l'autre, capables de former un volume intermédiaire (22) dans lequel une partie du radiateur (50), un tuyau (51) en particulier, peut être retenue, permettant ainsi au radiateur (50) d'être retenu, sachant que l'élément de retenue (20) dispose d'une position ouverte (20.1) dans laquelle les branches (21) sont ouvertes de sorte que le volume (22) est ouvert et que la partie du radiateur (50) peut être montée contre l'élément de retenue (20), et dispose en outre d'une position de fermeture (20.2) dans laquelle les branches (21) forment le volume intermédiaire (22) dans lequel peut être logée la partie du radiateur (50) et peut être retenue contre l'élément de retenue (20), et sachant que l'élément de retenue (20) présente au moins une saillie d'actionnement (48) qui, lorsqu'une force (52) est exercée depuis le devant, par exemple du fait du mouvement de montage du radiateur (50), transfère l'élément de retenue (20) de sa position ouverte (20.1) vers sa position fermée (20.2),
**caractérisé en ce que**
lors du transfert de l'élément de retenue (20) vers sa position de fermeture (20.2), les branches (21) pivotent automatiquement, sachant qu'au cours de cette opération une protubérance (27) prévue contre le côté avant (23) de l'une des branches (21) entre en liaison efficace avec une protubérance antagoniste (28) sur l'autre branche (21) et encrante, avec pour effet d'engendrer un état verrouillé (21.1), et sachant que l'élément de retenue (20) ne se laisse amener sur sa position ouverte (20.1) qu'en agissant sur la protubérance (27) et/ou sur la protubérance antagoniste (28) au moyen d'un outil d'ouverture (70).

2. Dispositif selon la revendication 1, **caractérisé en ce que** la protubérance (27) est configuré en saillie de crantage (46) et que la protubérance antagoniste (28) est configurée en évidement (47).

3. Dispositif selon l'une des revendications 1 ou 2, **caractérisé en ce que** contre chaque branche (21) est prévu un insert en matière plastique (25, 25a) reliable avec la branche (21), en particulier au moyen d'une liaison par clip (26) ou d'une liaison crantée ou par collage, vissage ou rivetage, sachant que notamment le premier insert en plastique (25) présente la protubérance (27) et/ou la saillie de crantage (46) et que le deuxième insert en plastique (25a) présente la protubérance antagoniste (28) et/ou l'évidement (47).

4. Dispositif selon l'une des revendications 1 à 3, **caractérisé en ce que** les deux branches (21) sont configurées de construction identique.

5. Bloc (10) comprenant un dispositif selon l'une des revendications 1 à 4, ainsi qu'au moins une console (30) contre laquelle il est possible d'immobiliser le ou les éléments de retenue (20) du dispositif.

6. Bloc (10) selon la revendication 5, **caractérisé en ce que** contre l'élément de retenue (20) est prévu une sécurité (40) anti-déboîtement empêchant le déboîtement involontaire de chacun des éléments de retenue (20) de la console (30).

7. Bloc (10) selon la revendication 6, **caractérisé en ce que** pour démonter l'élément de retenue (20) de la console (30) est prévu une pièce d'actionnement (41) configurée notamment contre la sécurité anti-déboîtement (40) et qui se trouve normalement sur sa position de blocage (41.1), position dans laquelle la pièce d'actionnement (41) engrène dans la console (30) et empêche que l'élément de retenue (20) ne se détache de la console (30), mais qu'il est possible d'amener dans une position de démontage dans laquelle l'élément de retenue (20) peut être détaché de la console (30).

8. Bloc (10) selon la revendication 7, **caractérisé en ce qu'**est prévu un outil de démontage (60) pour transférer la pièce d'actionnement (41) sur sa position de démontage, sachant que sur la pièce d'actionnement (41) est configuré un évidement (42) dans lequel il est possible d'introduire au moins localement l'outil de démontage (60), sachant qu'il est possible d'éloigner la pièce d'actionnement (41) de la console (30) au moyen de l'outil de démontage (60), en particulier au moyen d'un ou de plusieurs rails (29) pour la désengrener de la console (30) et l'amener ainsi sur sa position de démontage et pour détacher l'élément de retenue (20) de la console (30).

9. Bloc (10) selon l'une des revendications 5 à 8, **caractérisé en ce qu'**est prévu l'outil d'ouverture (70) qui peut agir sur l'élément de retenue (20), en particulier sur la protubérance (27) ou la saillie de crantage (46), pour provoquer un transfert de l'élément de retenue (20) vers sa position ouverte (20.1).

10. Bloc selon la revendication 9, **caractérisé en ce que** l'outil d'ouverture (70) est configuré de telle sorte qu'il agit sur l'élément de retenue (20) depuis le côté (24) ne regardant pas les branches (21), afin de l'amener sur sa position ouverte (20.1).

11. Bloc (10) selon l'une des revendications 5 à 10, **caractérisé en ce que** les éléments de retenue (20) montés contre la console (30) sont déplaçables latéralement.

12. Bloc (10) selon l'une des revendications 5 à 11, **caractérisé en ce que** l'extrémité supérieure (33) de la console (30) présente un équipement d'ajustage (31) afin de compenser les tolérances de hauteur de montage.

13. Bloc (10) selon l'une des revendications 5 à 12, **caractérisé en ce qu'**est prévue une sécurité (53) empêchant qu'un radiateur (50) monté contre le bloc (10) puisse être déplacé vers le haut.

14. Outil d'ouverture (70) pour ouvrir un élément de retenue (20) selon l'une des revendications 1 à 4, **caractérisé en ce que** l'outil d'ouverture (70) présente en son extrémité (72) une poignée (71) et en son autre extrémité (73) une extrémité d'actionnement (74) permettant de l'amener en liaison efficace avec la protubérance (27) ou avec la protubérance antagoniste (28), sachant que l'autre extrémité (73) de l'outil d'ouverture (70) présente un bord relevé (75) de telle sorte qu'elle puisse atteindre, en présence d'un élément de retenue (20) monté contre un radiateur (50), la protubérance (27) ou la protubérance antagoniste (28) depuis le côté (24) ne regardant pas les branches (21).
